(19) Europäisches Patentamt
European Patent Office
Office européen des brevets

(11) **EP 4 783 482 A1**

(12) **EUROPEAN PATENT APPLICATION**
published in accordance with Art. 153(4) EPC

(43) Date of publication:
**29.07.2026 Bulletin 2026/31**

(21) Application number: 24868620.6

(22) Date of filing: **13.09.2024**

(51) International Patent Classification (IPC):
*H04B 7/06* (2006.01)   *H04B 7/0456* (2017.01)
*H04W 24/08* (2009.01)   *H04B 17/318* (2015.01)
*G06N 20/00* (2019.01)

(52) Cooperative Patent Classification (CPC):
**G06N 20/00; H04B 7/0456; H04B 7/06;
H04B 17/318; H04W 24/08**

(86) International application number:
**PCT/KR2024/013983**

(87) International publication number:
**WO 2025/063643 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.09.2023 KR 20230123999**

(71) Applicant: **LG Electronics Inc.**
**Yeongdeungpo-gu**
**Seoul 07336 (KR)**

(72) Inventors:
• **YOO, Junhyuk**
  **Seoul 06772 (KR)**
• **PARK, Haewook**
  **Seoul 06772 (KR)**
• **KANG, Jiwon**
  **Seoul 06772 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **METHOD AND DEVICE FOR SIGNAL MEASUREMENT AND REPORTING**

(57)    A method according to an embodiment of the present disclosure comprises receiving configuration information and transmitting a report based on the configuration information. The report includes information related to a predicted Reference Signal (RS) index among a plurality of RS indexes. A measurement related to the report is based on information representing one or more RS indexes. The information representing the one or more RS indexes is configured based on a bitmap.

【FIG. 12】

EP 4 783 482 A1

**Description**

[TECHNICAL FIELD]

The present disclosure relates to a method and device for measuring and reporting a signal.

[BACKGROUND]

A mobile communication system has been developed to provide a voice service while ensuring the activity of a user. However, the area of the mobile communication system has extended to a data service in addition to a voice. Due to the current explosive increase in traffic, there is a shortage of resources, and thus users demand a higher speed service. Accordingly, there is a need for a more advanced mobile communication system.

Requirements for a next-generation mobile communication system need to be able to support the accommodation of explosive data traffic, a dramatic increase in the data rate per user, the accommodation of a significant increase in the number of connected devices, very low end-to-end latency, and high-energy efficiency. To this end, various technologies, such as dual connectivity, massive multiple input multiple output (MIMO), in-band full duplex, non-orthogonal multiple access (NOMA), super wideband support, and device networking, are researched.

Measurement and reporting operations for beam management are defined. For example, at least one of a plurality of reference signal (RS) indices may be predicted from measurements based on one or more RS indices. Information related to the at least one RS index may be reported.

[DISCLOSURE]

[TECHNICAL PROBLEM]

According to a beam prediction operation, one or more of all beams may be predicted based on the measurement of a limited number of beams (e.g., one or more RS indices described above). That is, if the beams (RS indices) to be measured are configured/indicated based on the total number of beams, signaling overhead required for the measurement configuration may increase excessively. As a communication frequency band increases, a beam width narrows and the total number of beams increases, which may further increase the above-described signaling overhead. The purpose of the present disclosure is to propose a configuration method that takes the above-described signaling overhead into account.

If a pattern for the above-described beam prediction (e.g., one or more RS indices described above) is fixed, beam prediction performance may deteriorate due to channel variation, such as blockage. Another purpose of the present disclosure is to propose a configuration method that can prevent performance degradation due to channel variation.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method according to an embodiment of the present disclosure comprises receiving configuration information and transmitting a report based on the configuration information.

The report includes information related to a predicted Reference Signal (RS) index among a plurality of RS indexes. A measurement related to the report is based on information representing one or more RS indexes. The information representing the one or more RS indexes is configured based on a bitmap.

Information indicating the bitmap among a plurality of bitmaps may be configured based on higher layer signaling.

The bitmap may be determined based on an order related to a time instance among a plurality of bitmaps.

The bitmap may be changed based on the time instance.

The time instance may include i) a time instance for the measurement, ii) a time instance for a prediction, or iii) a time instance for the report.

The bitmap may include a first bitmap and a second bitmap. One or more subsets among subsets related to the plurality of RS indexes may be configured based on the first bitmap.

An RS index belonging to each of the one or more subsets may be configured based on the second bitmap.

An RS index belonging to each of subsets related to the plurality of RS indexes may be configured based on the bitmap.

The information representing the one or more RS indexes may be configured based on i) the bitmap or ii) mapping information.

The number of RS indexes mapped to each of the one or more RS indexes of the plurality of RS indexes may be indicated based on the mapping information.

The information related to the predicted RS index may include i) at least one RS index and/or ii) at least one Reference Signal Received Power (RSRP) related to the at least one RS index.

The at least one RS index may be related to at least one future time instance.

The measurement may be related to at least one time instance.

The measurement may be related to an input of a model, and the predicted RS index may be related to an output of the model.

The model may include i) a UE-sided model and/or ii) a network-sided model.

A user equipment according to another embodiment of the present disclosure includes one or more transceivers, one or more processors, and one or more memories connected to the one or more processors and storing instructions.

The instructions, based on being executed by the one or more processors, allow the user equipment to perform all steps according to any one of the methods.

A device according to another embodiment of the present disclosure includes one or more memories and one or more processors connected to the one or more memories. The one or more memories store instructions based on being executed by the one or more processors, and the instructions allow the device to perform all steps according to any one of the methods.

A non-transitory computer readable medium according to another embodiment of the present disclosure stores instructions. The instructions executable by one or more processors allow a user equipment to perform all steps of any one of the methods.

A method according to another embodiment of the present disclosure comprises transmitting configuration information and receiving a report based on the configuration information.

The report includes information related to a predicted Reference Signal (RS) index among a plurality of RS indexes. A measurement related to the report is based on information representing one or more RS indexes. The information representing the one or more RS indexes is configured based on a bitmap.

A base station according to another embodiment of the present disclosure includes one or more transceivers, one or more processors, and one or more memories connected to the one or more processors and storing instructions.

The instructions, based on being executed by the one or more processors, allow the user equipment to perform all steps according to any one of the methods.

[ADVANTAGEOUS EFFECTS]

According to an embodiment of the present disclosure, one or more RS indices related to measurement are configured based on a bitmap. Therefore, a measurement target for beam prediction can be configured more efficiently in terms of signaling overhead.

According to an embodiment of the present disclosure, the bitmap is based on one of multiple bitmaps. Therefore, compared to when fixed beams are used for measurement, the performance degradation of beam prediction due to the channel variation can be mitigated. Furthermore, the flexibility of base station/NW operations related to measurement configuration can be increased.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates an example of beamforming using SSB and CSI-RS.

FIG. 2 is a flowchart illustrating an example of a DL BM procedure.

FIG. 3 illustrates a functional framework of AI/ML model.

FIG. 4 illustrates an example of beam prediction based on AI/ML model.

FIG. 5 illustrates another example of beam prediction based on AI/ML model.

FIG. 6 illustrates a bitmap based beam pattern according to an embodiment of the present disclosure.

FIG. 7 illustrates a beam pattern configuration based on multiple bitmaps according to an embodiment of the present disclosure.

FIG. 8 illustrates a beam pattern configured based on multiple bitmaps in accordance with an embodiment of the present disclosure.

FIG. 9 illustrates a beam pattern in which the same bitmap is applied to all subpixels in accordance with an embodiment of the present disclosure.

FIG. 10 illustrates a beam pattern based on a first bitmap and a second bitmap determined based on the first bitmap in accordance with an embodiment of the present disclosure.

FIG. 11 illustrates mapping between beam sets according to an embodiment of the present disclosure.

FIG. 12 is a flowchart illustrating a method according to an embodiment of the present disclosure.

FIG. 13 is a flowchart illustrating a method according to another embodiment of the present disclosure.

FIG. 14 illustrates configuration of a first device and a second device according to an embodiment of the present disclosure.

FIG. 15 illustrates a vehicle or an autonomous driving vehicle according to an embodiment of the present disclosure.

FIG. 16 illustrates an AI device according to the embodiment of the present disclosure.

[DETAILED DESCRIPTION]

A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the terminal. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), AR(Augmented Reality) device, VR(Virtual Reality) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, an Unmanned Aerial Vehicle (UAV), AR(Augmented Reality) device, VR(Virtual Reality) device, and the like.

< Beam Management (BM) >

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.

- Beam measurement: Opeation of measuring characteristics of a beam forming signal received by the eNB or UE.
- Beam determination: Operation of selecting a transmit (Tx) beam/receive (Rx) beam of the eNB or UE by the eNB or UE.
- Beam sweeping: Operation of covering a spatial region using the transmit and/or receive beam for a time interval by a predetermined scheme.
- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS).

Further, each BM procedure may include Tx beam sweeping for determining the Tx beam and Rx beam sweeping for determining the Rx beam.

DL BM

The DL BM procedure may include (1) transmission of beamformed DL reference signals (RSs) (e.g., CIS-RS or SS Block (SSB)) of the eNB and (2) beam reporting of the UE.

Here, the beam reporting includes a preferred DL RS identifier (ID)(s) and L1-Reference Signal Received Power (RSRP) corresponding to the preferred DL RS identifier (ID)(s).

The DL RS ID may be an SSB Resource Indicator (SSBRI) or a CSI-RS Resource Indicator (CRI).

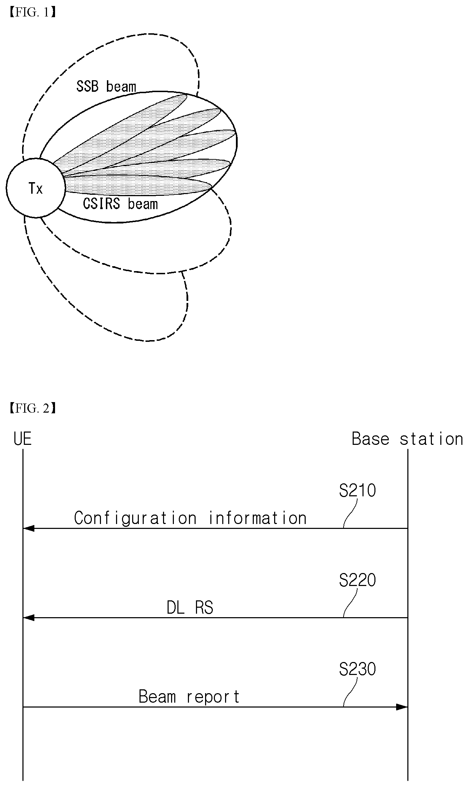

FIG. 1 illustrates an example of beamforming using SSB and CSI-RS.

As illustrated in FIG. 1, an SSB beam and a CSI-RS beam may be used for the beam management. A measurement metric is an L1-RSRP for each resource/block. The SSB may be used for coarse beam management and the CSI-RS may be used for fine beam management. The SSB may be used for both the Tx beam sweeping and the Rx beam sweeping.

The Rx beam sweeping using the SSB may be performed while the UE changes the Rx beam for the same SSBRI across multiple SSB bursts. Here, one SS burst includes one or more SSBs and one SS burst set includes one or more SSB bursts.

FIG. 2 is a flowchart showing an example of a DL BM procedure using SSB.

A configuration for beam report using the SSB is performed during a CSI/beam configuration in an RRC connected state (or RRC connected mode).

- The UE receives from the eNB CSI-ResourceConfig IE including CSI-SSB-ResourceSetList including SSB resources used for the BM (S210).

Table 1 shows an example of CSI-ResourceConfig IE. As shown in Table 1, a BM configuration using the SSB is not separately defined and the SSB is configured like the CSI-RS resource.

【Table 1】

```
-- ASN1START
-- TAG-CSI-RESOURCECONFIG-START


CSI-ResourceConfig ::=                  SEQUENCE {
       csi-ResourceConfigId                  CSI-ResourceConfigId,
       csi-RS-ResourceSetList                CHOICE {
          nzp-CSI-RS-SSB                          SEQUENCE {
               nzp-CSI-RS-ResourceSetList              SEQUENCE (SIZE (1..maxNrofNZP-CSI-
RS-ResourceSetsPerConfig)) OF NZP-CSI-RS-ResourceSetId OPTIONAL,
               csi-SSB-ResourceSetList              SEQUENCE (SIZE (1..maxNrofCSI-SSB-
ResourceSetsPerConfig)) OF CSI-SSB-ResourceSetId        OPTIONAL
          },
          csi-IM-ResourceSetList                SEQUENCE (SIZE (1..maxNrofCSI-IM-
ResourceSetsPerConfig)) OF CSI-IM-ResourceSetId
       },

       bwp-Id                                  BWP-Id,
       resourceType                            ENUMERATED { aperiodic, semiPersistent, periodic },
       ...
}
```

```
-- TAG-CSI-RESOURCECONFIGTOADDMOD-STOP
-- ASN1STOP
```

In Table 1, csi-SSB-ResourceSetList parameter represents a list of SSB resources used for beam management and reporting in one resource set. Here, SSB resource set may be configured as {SSBx1, SSBx2, SSBx3, SSBx4, ...}. For example, SSB index may be defined as 0 to 63.

- The UE receives from the eNB the SSB resource based on the CSI-SSB-ResourceSetList (S220).

- When CSI-reportConfig associated with reporting of SSBRI and L1-RSRP is configured, the UE (beam) reports to the eNB best SSBRI and L1-RSRP corresponding thereto (S230).

In other words, when reportQuantity of the CSI-reportConfig IE is configured as 'ssb-Index-RSRP', the UE reports to the eNB best SSBRI and L1-RSRP corresponding thereto.

In addition, when the CSI-RS resource is configured in the same OFDM symbol(s) as SSB (SS/PBCH Block) and 'QCL-TypeD' is applicable, the UE may assume that the CSI-RS and the SSB are quasi co-located from the viewpoint of 'QCL-TypeD'.

Here, the QCL TypeD may mean that antenna ports are QCL from the viewpoint of a spatial Rx parameter. When the UE receives a plurality of DL antenna ports having a QCL Type D relationship, the same Rx beam may be applied. Further, the UE does not expect that the CSI-RS is configured in an RE overlapped with the RE of the SSB.

BM enhancements in NR Rel-17

In NR, a DL beam is indicated through a transmit configuration indicator (TCI) and thus is referred to as a unified TCI state. An existing TCI state was separately configured/indicated for each DL RS/channel, but the unified TCI state is characterized by unified configuration/indication. Basically, a DL unified TCI state indicates a QCL type-D RS which is unified applied to (some) PDCCHs, PDSCH, and (some) CSI-RS resources, and an UL unified TCI state indicates a spatial relation RS (and PL RS) which is unified applied to (some) PUCCHs, PUSCH, and (some) SRSs. Since the UL spatial relation and PL RS can also be matched with the DL beam RS for a UE, for which beam correspondence is established, in the same manner as Rel-16 default spatial relation/PL RS feature, the channels/RS to which the unified TCI state is applied can encompass both DL channels/RSs and UL channels/RSs. This is referred to as a joint DL/UL TCI state. That is, the following two modes will be supported.

- Joint DL/UL TCI configuration/indication mode: DL RS configured/indicated in a joint TCI state may be applied as not only the QCL type-D RSs for DL channels/RSs but also the spatial relation RSs (and PL RS) for UL channels/RSs. That is, if an update to the joint TCI state is indicated, the beam RSs (or/and PL RS) for the DL channels/RSs and the UL channels/RSs may be changed together.
- Separate DL and UL TCI configuration/indication mode: QCL type-D source RSs for DL channels/RSs are unified and configured/indicated by a DL TCI state, and the spatial relation RSs (and PL RS) for UL channels/RSs are unified and configured/indicated by the UL TCI state. The DL TCI state and the UL TCI state are separately configured/indicated.

The DL/UL/joint TCI state will be indicated/updated via MAC-CE and/or DCI. More specifically, one or more TCI states of multiple TCI states configured by RRC (called a TCI state pool) are activated by MAC-CE. If the multiple TCI states are activated by MAC-CE, one of the multiple TCI states is indicated by DCI.

The DCI indication will be supported via a downlink DCI format (DCI1-1/1-2) in which a TCI field is supported, and will be supported both with PDSCH scheduling and without PDSCH scheduling. In the latter case, since the PDSCH scheduling is omitted (similar to the DCI-based semi-persistent scheduling (SPS) release method), ACK transmission of the UE for the corresponding DCI will be supported.

Enhancements related to beam report will be made in Rel-17. Rel-17 beam report mode will support a mode in which a UE measures/reports an optimal beam RS for each TRP, targeting a multi-TRP environment. To this end, if a beam measurement RS set/group is divided into two subsets/sub-groups, and the base station configures them, the UE will select RS(s) for each subset/sub-group and report them along with a quality value (L1-RSRP, [L1-SINR]) of the corresponding RS.

<CSI related operation>

In a new radio (NR) system, a channel state information-reference signal (CSI-RS) is used for time and/or frequency tracking, CSI computation, and layer 1 (L1)-reference signal received power (RSRP) computation and mobility. The CSI computation is related to CSI acquisition, and the L1-RSRP computation is related to beam management (BM).

A terminal (e.g., a user equipment (UE)) receives configuration information related to the CSI from a base station (e.g., general Node B (gNB)) via radio resource control (RRC) signaling.

The configuration information related to the CSI may include at least one of CSI-interference management (IM) resource related information, CSI measurement configuration related information, CSI resource configuration related information, CSI-RS resource related information, or CSI report configuration related information.

Each CSI resource setting 'CSI-ResourceConfig' includes configuration for S≥1 CSI resource set (given by higher layer parameter 'csi-RS-ResourceSetList'). The CSI resource setting corresponds to CSI-RS-resourcesetlist, where S denotes the number of configured CSI-RS resource sets. Here, a list of S≥1 CSI resource set includes either or both of NZP CSI-RS resource set(s) and SS/PBCH block (SSB) set(s) used for L1-RSRP computation, or includes CSI-IM resource set(s).

The UE may measure channel characteristics based on CSI-RS and feedback a CSI report as a result to the base station. To this end, a CSI report configuration may be provided for the UE. Each CSI report configuration may include configuration for a feedback type, a measurement resource, a report type, etc.

The feedback type may include a Channel Quality Indicator (CQI), a Precoding Matrix Indicator (PMI), CSI-RS Resource Indicator (CRI), SSB Resource block Indicator (SSBRI), a Layer Indicator (LI), a Rank Indicator (RI), L1-Reference Signal Received Strength (RSRP), or the like.

The measurement resource may include configuration for downlink signal and/or downlink resource on which the UE will perform measurement to determine feedback information. The measurement resource may be configured as ZP and/or NZP CSI-RS resource set associated with the CSI report configuration. The NZP CSI-RS resource set may include a CSI-RS set or an SSB set. For example, the L1-RSRP may be measured for the CSI-RS set or measured for the SSB set.

**\<AIML related description\>**

Advances in artificial intelligence (AI)/machine learning (ML) technology are leading to the intelligence/advanced advancement of nodes and terminals that make up wireless communication networks.

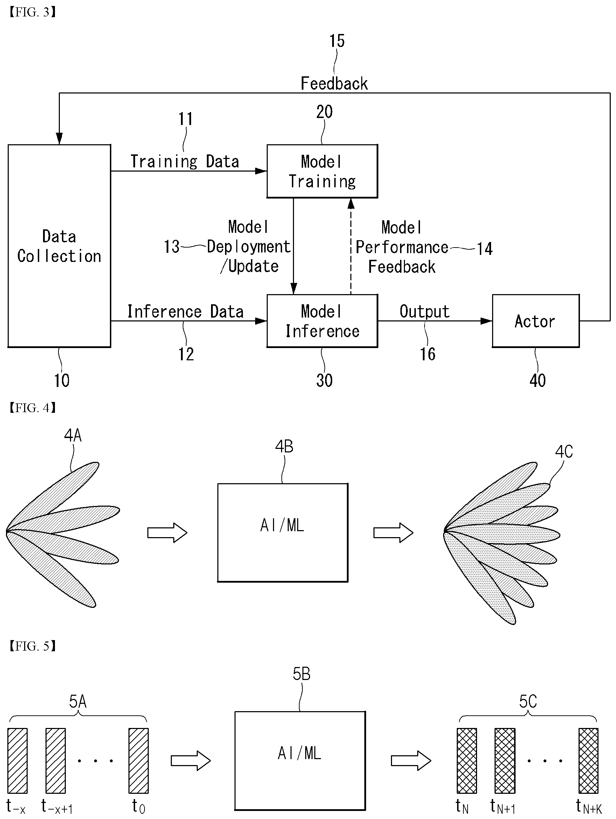

A functional framework for AI operation is described below with reference to FIG. 3.

FIG. 3 illustrates a functional framework of AI/ML model.

The terms may be defined as below to more specifically explain AI (or AI/ML).

- Data collection: Data collected from network nodes, management entities, or UEs as a basis for AI model training, data analysis, and inference
- AI Model: Data driven algorithm adopting AI technology to generate a set of outputs including prediction information and/or decision parameters based on a set of inputs
- AI/ML training: Online or offline process that trains an AI model by learning functions and patterns that best represent data and obtain an AI/ML model trained for inference
- AI/ML Inference: Process that predicts or induces decisions based on data and an AI model collected using a trained AI model

Referring to FIG. 3, a data collection function 10 is a function that collects input data and provides processed input data to a model training function 20 and a model inference function 30.

Examples of the input data may include measurements from UEs or other network entities, feedback from actors, and outputs of AI models.

The data collection function 10 performs data preparation based on the input data and provides processed input data through the data preparation. The data collection function 10 does not perform specific data preparation (e.g., data pre-processing and cleaning, forming, and transformation) per AI algorithm and may perform common data preparation on the AI algorithms.

After the data preparation process is performed, the data collection function 10 provides training data 11 to the model training function 20 and provides inference data 12 to the model inference function 30. The training data 11 is data required as input for the AI model training function 20. The inference data 12 is data required as input for the AI model inference function 30.

The data collection function 10 may be performed by a single entity (e.g., UE, RAN node, network node, etc.) or may be performed by multiple entities. In this case, the training data 11 and the inference data 12 may be respectively provided to the model training function 20 and the model inference function 30 from the multiple entities.

The model training function 20 is a function that performs AI model training, validation, and testing that can generate model performance metrics as part of an AI model test procedure. The model training function 20 is also responsible for the data preparation (e.g., data pre-processing and cleaning, forming, and transformation) based on the training data 11 provided by the data collection function 10, if necessary.

A model deployment/update 13 is used to initially deploy a trained, verified, and tested AI model to the model inference function 30 or to provide an updated model to the model inference function 30.

The model inference function 30 is a function that provides an AI model inference output 16 (e.g., prediction or decision). The model inference function 30 may provide a model performance feedback 14 to the model training function 20 if applicable. In addition, the model inference function 30 is also responsible for the data preparation (e.g., data pre-processing and cleaning, forming, and transformation) based on the inference data 12 provided by the data collection function 10 if necessary.

The output 16 refers to an inference output of an AI model generated by the model inference function 30, and the details of the inference output may vary depending on use cases.

The model performance feedback 14 may be used to monitor the performance of the AI model if available, and the feedback may be omitted.

An actor function 40 is a function that receives the output 16 from the model inference function 30 and triggers or performs a corresponding task/action. The actor function 40 may trigger tasks/actions for other entities (e.g., one or more UEs, one or more RAN nodes, one or more network nodes, etc.) or for itself.

A feedback 15 may be used to derive the training data 11 and the inference data 12 or to monitor the performance of the AI model, an impact on the network, etc.

The definitions of training/validation/test in a data set used in AI/ML may be distinguished as follows.

- Training data: It refers to a data set for learning a model.
- Validation data: It refers to a data set for validating a model whose learning has already been completed. That is, it refers to a data set usually used to prevent overfitting of a training data set.

The validation data also refers to a data set for selecting the best among various models learned during the learning process. Therefore, the validation data may be considered to be a type of learning.

- Test data: It refers to a data set for final evaluation. This data is unrelated to learning.

In the data set, if a training set is generally divided, the training data and the validation data may be divided and used in a ratio of 8:2 or 7:3 within the entire training set, and if the test data is included, they may be divided and used in a ratio of 6:2:2 (training: validation: test).

The above functions illustrated in FIG. 3 may be implemented in a RAN node (e.g., a base station, TRP, a central unit (CU) of a base station, etc.), a network node, operation administration maintenance (OAM) of a network operator, or a UE.

Alternatively, the function illustrated in FIG. 3 may be implemented through collaboration between two or more entities among the RAN, the network node, OAM of the network operator, or the UE. For example, one entity may perform some of the functions of FIG. 3 and another entity may perform the remaining functions. As such, as some of the functions illustrated in FIG. 3 are performed by a single entity (e.g., UE, RAN node, network node, etc.), delivery/provision of data/information between the respective functions is omitted. For example, if the model training function 20 and the model inference function 30 are performed by the same entity, the delivery/provision of the model deployment/update 13 and the model performance feedback 14 may be omitted.

Alternatively, any one of the functions illustrated in FIG. 3 may be performed through collaboration between two or more entities among the RAN, the network node, OAM of the network operator, or the UE. This may be referred to as a split AI operation.

<AI Model Training Function (network node) - AI Model Inference Function (RAN node)>

The following describes operation when the AI model training function is performed by a network node (e.g., core network node, OAM of the network operator, etc.) and the AI model inference function is performed by a RAN node (e.g., base station, TRP, CU of the base station, etc.).

Step 1: RAN node 1 and RAN node 2 transmit input data (i.e., training data) for AI model training to a network node. The RAN node 1 and the RAN node 2 may transmit data (e.g., measurement of a UE related to RSRP, RSRQ, and SINR of a serving cell and neighboring cells, location of the UE, speed, etc.) collected from a UE to the network node together.

Step 2: The network node trains the AI model using the received training data.

Step 3: The network node deploys/updates the AI model to the RAN node 1 and/or the RAN node 2. The RAN node 1 (and/or the RAN node 2) may continue to perform the model training based on the received AI model.

For convenience of explanation, it is assumed that the AI Model has been deployed/updated only to the RAN node 1.

Step 4: The RAN node 1 receives input data (i.e. inference data) for AI model inference from the UE and the RAN node 2.

Step 5: The RAN node 1 performs AI model inference using the received inference data to generate output data (e.g., prediction or decision).

Step 6: If applicable, the RAN node 1 may transmit model performance feedback to the network node.

Step 7: The RAN node 1, the RAN node 2, and the UE (or 'the RAN node 1 and the UE' or 'the RAN node 1 and the RAN node 2') perform actions based on the output data. For example, in a load balancing operation, the UE may move from the RAN node 1 to the RAN node 2.

Step 8: The RAN node 1 and the RAN node 2 transmit feedback information to the network node.

<AI Model Training/Inference Function: RAN node>

The following describes operation when both the AI model training function and the AI model inference function are performed by a RAN node (e.g., base station, TRP, CU of the base station, etc.).

Step 1: A UE and RAN Node 2 transmit input data (i.e., training data) for AI model training to RAN node 1.

Step 2: The RAN node 1 trains the AI model using the received training data.

Step 3: The RAN node 1 receives input data (i.e., inference data) for AI model inference from the UE and the RAN node 2.

Step 4: The RAN node 1 performs AI model inference using the received inference data to generate output data (e.g., prediction or decision).

Step 5: The RAN node 1, the RAN node 2, and the UE (or 'the RAN node 1 and the UE' or 'RAN node 1 and RAN node 2') perform actions based on the output data. For example, in a load balancing operation, the UE may move from the RAN node 1 to the RAN node 2.

Step 6: The RAN node 2 transmits feedback information to the RAN node 1.

<AI Model Training Function (RAN node) - AI Model Inference Function (UE)>

The following describes operation when the AI model training function is performed by a RAN node (e.g., base station, TRP, CU of the base station, etc.) and the AI model inference function is performed by a UE.

Step 1: The UE transmits input data (i.e., training data) for AI Model training to the RAN node. The RAN node may collect data (e.g., measurements of the UE related to RSRP, RSRQ, and SINR of a serving cell and neighboring cells, location of the UE, speed, etc.) from various UEs and/or from other RAN nodes.

Step 2: The RAN node trains the AI Model using the received training data.

Step 3: The RAN node deploys/updates the AI Model to the UE. The UE may continue to perform model training based on the received AI Model.

Step 4: The UE receives input data (i.e., inference data) for AI Model Inference from the RAN node (and/or from another UE).

Step 5: The UE performs AI Model inference using the received inference data to generate output data (e.g., prediction or decision).

Step 6: If applicable, the UE may transmit model performance feedback to the RAN node.

Step 7: The UE and the RAN node perform actions based on output data.

Step 8: The UE transmits feedback information to the RAN node.

In the present disclosure, '/' means 'and', 'or', or 'and/or' according to a context.

In the present disclosure, 'beam' may mean a source RS for a 'spatial filter' or a 'spatial relation', and may be interpreted as a QCL (type-D) RS or a TCI state or (in case of uplink) a spatial relation RS.

As an example, in the present disclosure, 'beam' may mean a spatial filter determined based on the reference RS or the source RS. The spatial filter may include a spatial domain filter, a spatial domain transmission filter, and a spatial domain receive filter.

As an example, a beam related to UL may be referred to as i) a spatial filter (for uplink transmission or uplink reception), ii) a spatial domain filter (for uplink transmission or uplink reception), iii) an uplink spatial domain transmission filter, iv) an uplink spatial domain receive filter, v) an uplink transmission spatial filter (UL Tx spatial filter) or vi) an uplink receive spatial filter (UL Rx spatial filter).

As an example, a beam related to DL may be referred to as i) a spatial filter (for downlink transmission or downlink reception), ii) a spatial domain filter (for downlink transmission or downlink reception), iii) a downlink spatial domain transmission filter, iv) a downlink spatial domain receive filter, v) a downlink transmission spatial filter (DL Tx spatial filter) or vi) a downlink receive spatial filter (DL Rx spatial filter).

AI/ML is emerging to enhance the UE/network operation and reduce the UE/network complexity. In line with this trend, Release 18 is actively researching the application of AI/ML for CSI feedback, beam management, and positioning. The AI/ML-based operations may vary and differ per the use case or based on the AI/ML functionality/model implementation method.

BM-Case1 and BM-Case2 may be considered as the use case for improved beam management utilizing AI/ML. This is described in detail below.

Measurements based on Set B of beams are used as model input. Beam ID information may also be provided as input for the AI/ML model. Based on a model output (e.g., the probability that each beam in Set A is Top-1 beam, predicted L1-RSRPs), Top-1 beam and/or Top-N beams (and potentially predicted L1-RSRPs) in Set A of beams may be predicted.

This is described in detail below with reference to FIGS. 4 and 5.

FIG. 4 illustrates an example of beam prediction based on AI/ML model. More specifically, FIG. 4 illustrates a beam prediction operation based on BM-Case1 (Spatial-domain DL beam prediction).

BM-case 1: Spatial-domain DL beam prediction uses measurements based on fewer RSs (e.g., CSI-RS and/or SSB) as AI/ML input, compared to an existing method of sweeping an entire spatial beam/beam pair set. This is a use case that estimates an index and/or corresponding RSRP of the best beam from the entire beam/beam pair.

Referring to FIG. 4, for the BM-Case 1, measurements (4A) of the Set B (unless otherwise specified) may be used as inputs to a model (4B) to predict the Top-1 beam and/or Top-N beams (4C) of the Set A. For example, the output (4C) of the model (4B) may include a probability that each of the beams of the Set A is the Top-1 beam and/or the predicted L1-RSRPs.

FIG. 5 illustrates another example of beam prediction based on AI/ML model. More specifically, FIG. 5 illustrates a beam prediction operation based on BM-Case2 (Temporal DL beam prediction).

BM-case 2: Temporal-domain DL beam prediction is a use case that estimates an index and/or corresponding RSRP of the best beam of (multiple) future beams/beam pairs based on past beam measurement information. The BM-case 2 may include the BM-case 1.

Referring to FIG. 5, the BM-Case 2 may use measurements from historic time instance(s) 5A as an input of a model 5B to perform temporal-domain DL beam prediction for beams of Set A.

The BM-Case 1 and the BM-Case 2 may include DL Tx beam prediction/DL Tx-Rx beam pair prediction.

In the present disclosure, Set A, Set B, Set C, etc. may be defined as follows for convenience of explanation. However, 'Set A', 'Set B', and 'Set C' are only for distinguishing beams (RS indices), and are not intended to limit the technical ideas of the present disclosure to the terms.

Set A: The entire beam/beam pair set for beam prediction

Set B: The beam/beam pair set corresponding to information provided as input to AI/ML

Set C: The beam/beam pair set for which the UE performs actual measurement

Problems to be solved

For the BM-Case 1/2, a model may be trained using fixed/preconfigured Set B patterns among beams of Set A in the NW, and a beam prediction operation may be performed based on the model. In this case, training performance may vary depending on the pattern used to configure Set B. Therefore, an indication for the Set B patterns may be required from the NW to the UE or from the UE to the NW.

The present disclosure proposes the following methods to solve the above-described problems. Methods of efficiently indicating a Set B beam pattern are described below.

Proposal 1

A method of configuring a Set B beam pattern (e.g., RS indices) based on a bitmap may be considered.

An indication for Set A may be performed as follows.

The Set A may be configured/indicated based on i) the number of horizontal beams (or N1 domain beam number) and/or ii) the number of vertical beams (or N2 domain beam number).

The number of horizontal/vertical beams may be set/indicated based on parameters, such as N1, O1, N2, O2, etc., similar to a codebook parameter. $N_i$ (i = 1, 2) represents the number of antenna ports (elements) of Ni domain, and Oi represents an oversampling factor of the Ni domain. The Set A may be indicated based on a codebook structure. This is described in detail below.

Example of codebook based beam generation and parameterization

Analog beamforming may consist of weighting vectors of TXRU virtualization and may be configured using 2D subarray model of FD-MIMO as follows.

【Equation 1】

$$v_{l,i} = \frac{1}{\sqrt{L}} exp\left(-j\frac{2\pi}{\lambda}(l-1)d_H \sin\vartheta_i\right) \ for \ l = 1, ..., L, \ o=1,.....,o_{1_{TXRU}}L$$

$$w_{k,o} = \frac{1}{\sqrt{K}} exp\left(-j\frac{2\pi}{\lambda}(k-1)d_V \cos\theta_{\text{ctilt,o}}\right) \ for \ k = 1,...,K, \ o=1,.....,o_{2_{TXRU}}K$$

Here, $d_V$ and $d_H$ are a spacing of each antenna element, $\lambda$ is a carrier frequency, the length of $\mathbf{w_o}$ is given by K = M/N 1', and the length of $\mathbf{v_i}$ is given by L = N/N2'. K is the number of antenna elements of N1 domain per TXRU, L is the number of antenna elements of N2 domain per TXRU, and O1$_{TXRU}$ and O2$_{TXRU}$ are oversampling factors of 1-DFT beam formed by elements of each domain constituting the TXRU. And, $\vartheta_i$ represents N1 domain specific orientation angle, and

$\theta_{etilt.o}$ represents N2 domain specific orientation angle. If N1 is a horizontal domain and N2 is a vertical domain, they can be expressed as scan and tilt angles. Therefore, a shape of a final Tx analog beam is as shown in Equation 2.

【Equation 2】

$$\mathbf{W}_k \otimes \mathbf{v}_l$$

In the above Equation 2, antenna element indexing for virtualization is first performed in the N2 direction. If the antenna element indexing for virtualization is performed in the N1 direction, the above Equation 2 shall be converted to Equation 3 below.

【Equation 3】

$$\mathbf{V}_l \otimes \mathbf{w}_k$$

The direction oriented by the analog beam may be 2D as described above, or may be 1D only using vectors corresponding to horizontal or vertical virtualization. In the present disclosure, a 2D analog beam based on Equation 2 is used for convenience of explanation.

Each vector in Equation 1 may be equally expressed as a DFT beam through a mathematical relationship. For example, if the vector is expressed as tilting and converted, it may be expressed as follows.

【Equation 4】

$$\theta_{tilt} = cos^{-1}\left(\frac{-m_1\lambda}{o_{2,TXRU}Kd_v}\right)$$

The above Equation 1 can be expressed as follows using Equation 4.

【Equation 5】

$$v_l = \frac{1}{\sqrt{L}}\left[1\ exp(j\frac{2\pi l}{o_{1,TXRU}L})\cdots exp(j\frac{2\pi l(L-1)}{o_{1,TXRU}L})\right]^T$$

$$w_k = \frac{1}{\sqrt{K}}\left[1\ exp(j\frac{2\pi k}{o_{2,TXRU}K})\cdots exp(j\frac{2\pi k(K-1)}{o_{2,TXRU}K})\right]^T$$

In Equation 5, k = 0, ..., oK-1, and l = 0, ..., oL-1. Then, a maximum size of analog codebook may be expressed as the product of L * O1$_{TXRU}$ and K * O2$_{TXRU}$.

The configuration of the analog codebook may allow a resulting tilting angle and a scan angle to be set uniformly for all of azimuth angles and zenith angles (e.g.,

$$\vartheta_{scan,l} = -\frac{\pi}{3} + \frac{2\pi}{3o_{1,TXRU}L}l\ \ (l=1,...o_{1,TXRU}L),\ \theta_{tilt,k} = \frac{\pi}{o_{2,TXRU}K}k\ \ (k=1,...o_{2,TXRU}K)$$

, and the above ex-

ample assumes that a range of the zenith angle is -pi to pi, and a range of the azimuth angle is -pi/3 to pi/3).

Alternatively, as in $\theta_1 \le \theta_{tilt} \le \theta_2$ and $\vartheta_1 \le \vartheta_{scan} \le \vartheta_2$, a codebook may be constructed by uniformly dividing boundary points of analog beams by the number of analog beams.

The number of analog beams used and boundary values of analog beam angles may be configured/indicated to the UE based on RRC signaling.

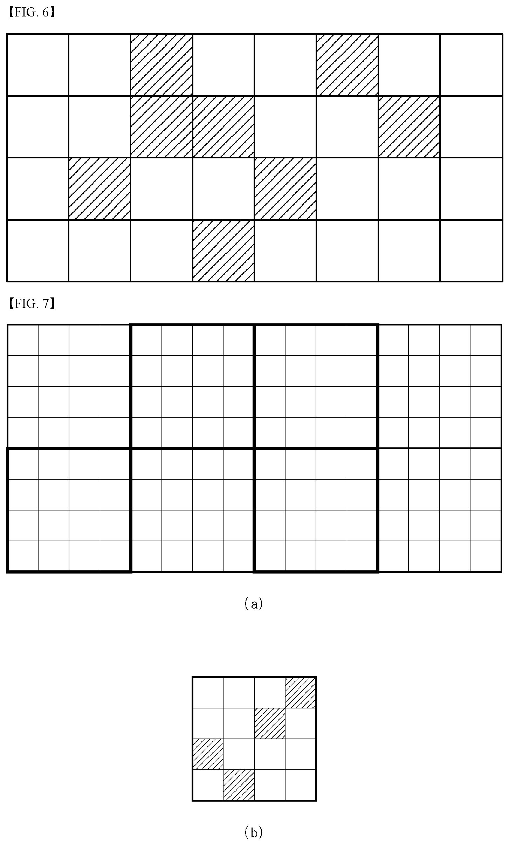

The Set B beam instruction is described below with reference to FIG. 6.

FIG. 6 illustrates a bitmap based beam pattern according to an embodiment of the present disclosure.

Referring to FIG. 6, the Set A may be defined as follows.

Set A = Horizontal 8 * vertical 4 = 32 beams

The Set B beam pattern may be indicated using 32-bitmap.

The Set B is for DL beam prediction as AI input for beam prediction. The set B may include a subset of beams selected from the entire beam set A, which may be related to AI output or gNB/UE beam configuration. The number of analog beams and the boundary values of the analog beam angles for the Set A may be configured/indicated to the UE based on RRC signaling.

The Set B, which is the subset of the Set A, may be variously configured based on 32-bitmap. For example, unallocated beams in the 32-bitmap may be configured to 1 (or 0), and allocated beams may be configured to 0 (or 1). The boundary points of the analog beams may be equally divided by the number of analog beams to construct a codebook. The number of configured analog beams and the boundary values of the analog beam angles may be configured/indicated to the UE based on RRC signaling.

The following embodiments may be considered for scalability of the beam sets. Only one bitmap (e.g., 32-bitmap) for a specific number may be indicated. Based on a predefined rule, a beam set larger or smaller than the beam set based on the corresponding bitmap may be indicated. This is described below using a specific example.

In the above example, an indication for 128 beams may be performed based on the 32-bitmap (reference bitmap) for 32 beams. For example, the number of beams for horizontal/vertical (or N1 domain/N2 domain) may be indicated as 16 and 8, respectively. Based on the number of beams for horizontal/vertical (16, 8) and the size of the reference bitmap (8, 4), a scaling factor may be calculated. That is, the scaling factor for horizontal may be calculated as 2, and the scaling factor for vertical may be calculated as 2. The reference bitmap can be expanded and applied based on the calculated scaling factor. That is, the reference bitmap can be interpreted as one element of the bitmap for the indication related to 128 beams. The UE can interpret/apply a bitmap consisting of four elements (2 X 2 reference bitmaps) as a bitmap for 128 beams.

Proposal 2

A method of dividing and configuring a Set B beam pattern into two phases may be considered. The method is described below with reference to FIGS. 7 to 10.

FIG. 7 illustrates a beam pattern configuration based on multiple bitmaps according to an embodiment of the present disclosure.

Proposal 2-1

Referring to FIG. 7, it is assumed that the Set A is Horizontal 16 * vertical 8 = 128 beams.

Referring to (a) of FIG. 7, subset(s) of Set A beams may be indicated based on a first bitmap (e.g., 8 bits) (e.g., 01101010).

Referring to (b) of FIG. 7, the same pattern is applied to allocated subsets. For each subset allocated based on a first bitmap, a pattern based on a second bitmap (e.g., 16 bits) may be applied. The pattern for the allocated subset may be configured/indicated based on the second bitmap (e.g., 16 bits).

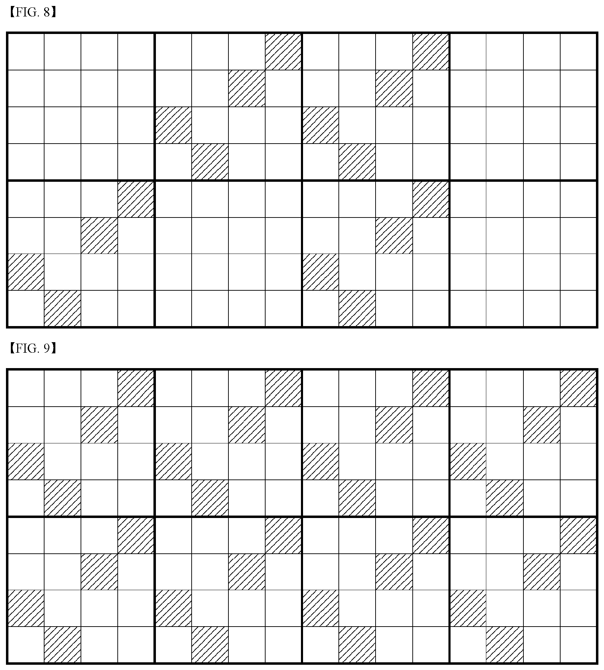

FIG. 8 illustrates a beam pattern configured based on multiple bitmaps in accordance with an embodiment of the present disclosure.

More specifically, FIG. 8 illustrates a Set B beam pattern configured based on the first bitmap according to (a) of FIG. 7 and the second bitmap according to (b) of FIG. 7 described above.

Proposal 2-2

Subset(s) of Set A beams may be indicated based on a first bitmap (e.g., 8 bits) (e.g., 01101010). A pattern for the allocated subset may be configured based on a second bitmap. In this instance, the second bitmap may be determined by a UE.

Proposal 2-3

The same pattern based on a bitmap may be configured for all subsets of Set A beams. This is described with reference to FIG. 9.

FIG. 9 illustrates a beam pattern in which the same bitmap is applied to all subpixels in accordance with an embodiment of the present disclosure.

Referring to FIG. 9, the same pattern is applied to all sections (8 subsets) based on 128 beams. In this instance, the same pattern may be configured based on i) a second bitmap indicated by a base station/NW or ii) a second bitmap determined by a UE.

Proposal 2-4

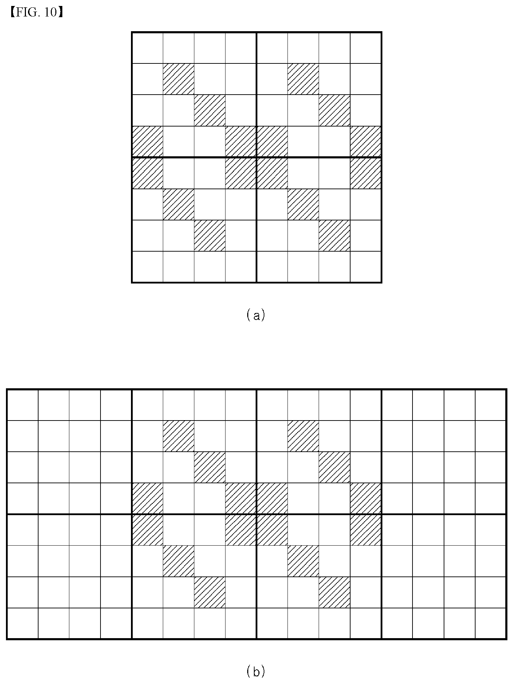

As in the above-described proposals, the Set B beam pattern may be divided and configured into two phases. In this instance, the second bitmap size may be determined based on the first bitmap. This is described in detail below with reference to FIG. 10.

FIG. 10 illustrates a beam pattern based on a first bitmap and a second bitmap determined based on the first bitmap in accordance with an embodiment of the present disclosure.

Referring to (a) of FIG. 10, subsets (e.g., four subsets) of Set A beams may be indicated based on a first bitmap (e.g., 8-bit bitmap, 01100110) (e.g., 01101010). The second bitmap size may be determined based on the number of subsets indicated based on the first bitmap (e.g., 8-bit bitmap) (ex: 16 * 4 = 64 bit). If the four subsets are indicated, a Set B beam pattern may be configured based on a 64-bit second bitmap. (a) of FIG. 10 illustrates that a pattern for each subset is equally configured, by way of example. For example, a pattern including different beams may be configured for each subset.

(b) of FIG. 10 illustrates a Set B beam pattern configured based on the first bitmap and the second bitmap described above,

When the number of beams in the Set A is large, the proposal 2 may be applied considering the overhead required for the indication of the set B. According to the proposal 2, the number of bits required to configure the set B beam pattern based on two bitmaps is less than the number of bits considering all beams in the set A. Therefore, the number of bits required for configuration/indication of the set B can be reduced.

When the Set B is configured, the number of analog beams and the boundary values of the analog beam angles configured for the first bitmap and the second bitmap may be configured to the UE based on RRC signaling.

Proposal 3

A method of using a preconfigured Set B pattern between a base station/NW and a UE may be considered.

Proposal 3-1

One of preconfigured Set B patterns may be indicated. For example, it may be assumed that four set B patterns are predefined/preconfigured. The UE may receive information indicating one of the four set B patterns (e.g., 00, 01, 10, or 11) from the base station/NW.

Proposal 3-2

The preconfigured set B patterns may be sequentially used. For example, based on a time instance related to the above-described beam prediction, one of the preconfigured set B patterns may be used in order. As a specific example, if four set B patterns are configured/defined, the order may be defined as 1, 2, 3, 4 (or 2, 1, 3, 4, etc.). The set B pattern based on the order (e.g., 1, 2, 3 or 4) among the four set B patterns may be applied based on the time instance. In other words, the set B pattern applied/used based on the order may be changed based on the time instance.

According to the proposal 3-1, no bit(s) are required to configure the beam pattern. That is, the proposal 3-1 requires only as many bits as can express one of the preconfigured set B patterns, which can reduce the number of bits required for the set B indication.

The operation based on the proposal 3-2 can be performed without a separate configuration. That is, one of the preconfigured set B patterns can be determined based on the above-described order.

Proposal 4

It may be assumed that Set B is less than Set C. That is, the number of beams in the Set B may be less than the number of beams in the Set C. A UE may additionally report to a base station information on beams that are not used as AI/ML input (Set B) in the Set C.

This embodiment may be particularly useful when Set A and the Set B are different. However, this embodiment may also be applied when the Set B is a subset of the Set A.

Proposal 5

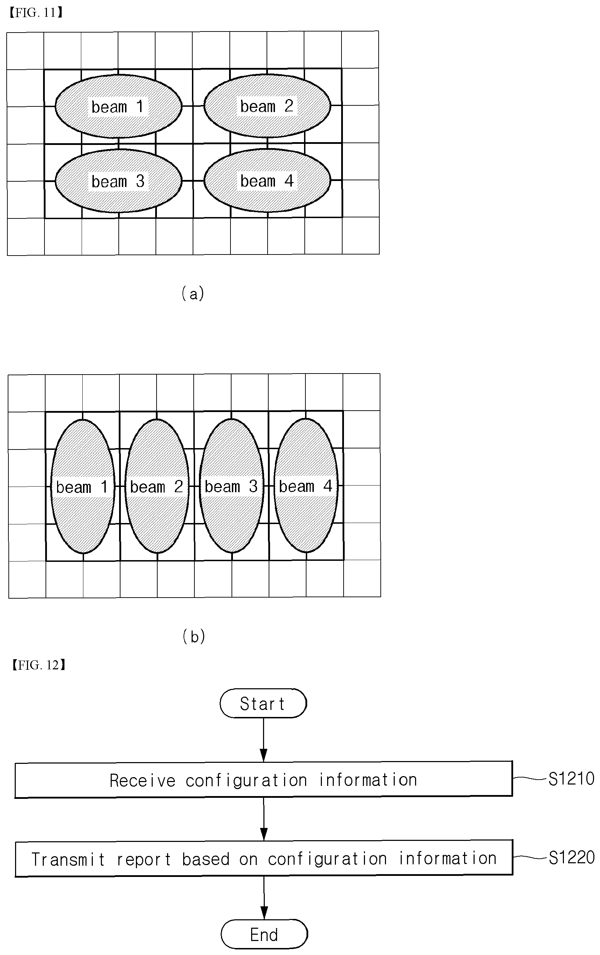

If Set A and Set B are different (i.e., if the Set B is not a subset of the Set A), linkage information (mapping information) of the Set A and the Set B may be configured/indicated to a UE. This is described below with reference to FIG. 11.

FIG. 11 illustrates mapping between beam sets according to an embodiment of the present disclosure.

In FIG. 11, it is assumed that Set A includes 32 narrow beams and Set B includes 3 wide beams. In this case, additional information on how the Set B is distributed within the Set A may be configured/indicated to a UE.

Specifically, FIG. 11 illustrates four Set B beams mapped to the Set A beams of the total of 4-by-8. In this case, the mapping between the Set B and the Set A may be based on one of two forms ((a) and (b) of FIG. 11).

The base station may configure/indicate mapping information (e.g., (a) or (b) of FIG. 11) to the UE.

For example, the mapping information may be defined as follows. The mapping information may represent a range of a Set A beam overlapping with one Set B beam.

In (a) of FIG. 11, the range of the Set A beam overlapping with one Set B beam may be configured/indicated as 2-by-4 based on the mapping information. In (b) of FIG. 11, the range of the Set A beam overlapping with one Set B beam may be configured/indicated as 4-by-2. For convenience of explanation, it is assumed in the above example that a vertical direction is N1 domain and a horizontal direction is N2 domain. If the opposite is assumed, the mapping information may also be differently indicated. That is, 4-by-2 may be configured/indicated in (a) of FIG. 11, and 2-by-4 may be configured/indicated in (b) of FIG. 11.

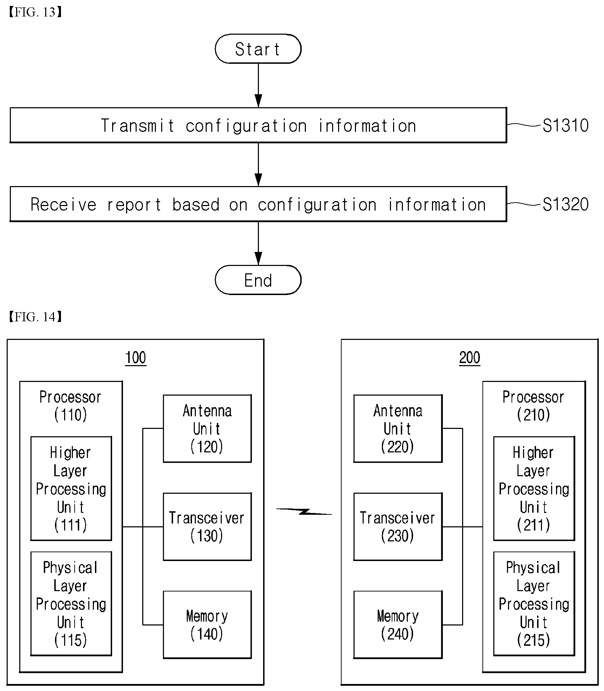

From an implementation perspective, operations of the UE/base station according to the above-described embodiments (e.g., operations based on at least one of the proposals 1 to 5) can be processed by a device (e.g., processors 110 and 210 of FIG. 14) of FIGS. 14 to 16 described below.

Further, the operations of the UE/base station according to the above-described embodiments (e.g., operations based on at least one of the proposals 1 to 5) can be stored in a memory (e.g., memories 140 and 240 of FIG. 14) in the form of commands/programs (e.g., instructions, executable codes) for running at least one processor (e.g., processors 110 and 210 of FIG. 14).

Below, the above-described embodiments are described in detail from a UE/base station operation perspective with reference to FIGS. 12 and 13. Methods described below are merely distinguished for convenience of explanation. Thus, it is obvious that partial configuration of any method can be substituted or combined with partial configuration of another method.

FIG. 12 is a flowchart illustrating a method according to an embodiment of the present disclosure.

Referring to FIG. 12, a method according to an embodiment of the present disclosure comprises a step S1210 of receiving configuration information and a step S1220 of transmitting a report based on the configuration information.

In the step S1210, a UE receives configuration infiormatuon from a base station.

The configuration infiormatuon may be received based on higher layer signaling (e.g., RRC signaling).

Specifically, the configuration infiormatuon may include information based on at least one of i) a beam management, ii) a CSI related operation, iii) AI/ML and/or iv) proposals 1 to 5.

For example, the configuration information may include information related to a CSI report. A report quantity may be configured based on the configuration information. The report quantity may be related to information reported by the UE. For example, the report quantity may be configured to represent at least one of i) a Reference Signal (RS) index (e.g., SSB Resource Indicator (SSBRI) and/or CRI (CSI-RS Resource Indicator), ii) Reference Signal Received Power (RSRP), iii) a Channel Quality Indicator (CQI) and/or iv) a Precoding Matrix Indicator (PMI).

In the step S3120, the UE transmits a report based on the configuration information to the base station.

For example, the report may include information configured to report based on the configuration information.

For example, the report may include at least one of i) a Reference Signal (RS) index (e.g., SSB Resource Indicator (SSBRI) and/or CRI (CSI-RS Resource Indicator), ii) Reference Signal Received Power (RSRP), iii) a Channel Quality Indicator (CQI) and/or iv) a Precoding Matrix Indicator (PMI).

The information included in the report may be related to the BM-case1 and/or the BM-case2 described above. As a specific example, the report may include i) RS index(es) and ii) RSRP(s) related to the RS index(es). The RS index(es) and the RSRP(s) may be based on measurement results or inference results. This is described in detail below with reference to the proposals 1 to 5.

According to an embodiment, the report may include information related to a predicted RS index among a plurality of Reference Signal (RS) indices.

For example, the plurality of RS indices may be related to beams of the above-described Set A. The plurality of RS indices may be configured based on higher layer parameter CSI-ResourceConfig.

For example, a measurement related to the report may be based on information representing one or more RS indices. The information representing the one or more RS indices may be information related to beams of the above-described Set B.

For example, the information representing the one or more RS indices may be based on a parameter for the beam management described above. For example, the higher layer parameter CSI-ResourceConfig may include the information (e.g., bitmap or mapping information) representing the one or more RS indices. For example, the information (e.g., bitmap or mapping information) representing the one or more RS indices may be configured based on the higher layer parameter CSI-ResourceConfig.

The information representing the one or more RS indices may be configured based on i) a bitmap (e.g., proposals 1 to 3) or ii) mapping information (e.g., proposal 5). Embodiments related to the bitmap and the mapping information are sequentially described below.

According to an embodiment, the information representing the one or more RS indices may be configured based on the bitmap. That is, the information representing the one or more RS indices may be configured as bitmap(s) based on at least one of the proposals 1 to 3.

According to an embodiment, information indicating the bitmap among a plurality of bitmaps may be configured based on higher layer signaling. The present embodiment may be based on the proposal 3-1. As a specific example, the plurality of bitmaps may be configured based on at least one higher layer parameter CSI-ResourceConfig. In this case, the at least one higher layer parameter CSI-ResourceConfig may be indicated based on the configuration information. That is, one of the plurality of bitmaps may be indicated based on the configuration information.

According to an embodiment, the bitmap may be determined based on an order related to a time instance among a plurality of bitmaps. The present embodiment may be based on the proposal 3-2. The bitmap may be changed based on the time instance. The time instance may include i) a time instance for the measurement, ii) a time instance for a prediction (e.g., model-based beam prediction), or iii) a time instance for the report.

According to an embodiment, the bitmap may include a first bitmap and a second bitmap. The present embodiment may be based on the proposal 2-1. Specifically, one or more subsets among subsets related to the plurality of RS indices may be configured based on the first bitmap. RS index(es) belonging to each of the one or more subsets may be configured based on the second bitmap.

According to an embodiment, an RS index belonging to each of subsets related to the plurality of RS indices may be configured based on the bitmap. The present embodiment may be based on the proposal 2-3. That is, the bitmap may be the second bitmap representing RS index(es) within each subset.

According to an embodiment, the information representing the one or more RS indices may be configured based on the mapping information. The present embodiment may be based on the proposal 5. Specifically, the number of RS indices mapped to each of the one or more RS indices of the plurality of RS indices may be indicated based on the mapping information. Referring to FIG. 11, the plurality of RS indices may be related to the beams of the Set A (e.g., 32 narrow beams), and the one or more RS indices may be related to the beams of the Set B (e.g., 3 wide beams among 4 wide beams). For example, the number of RS indices mapped to each of the one or more RS indices may be indicated in the form of first number * second number (e.g., 4by2 or 2by4). The first number may be the number of beams in a horizontal domain or the number of beams in a vertical domain. The second number may be the number of beams in the vertical domain or the number of beams in the horizontal domain.

According to an embodiment, the information related to the predicted RS index may be based on the measurement results (e.g., information for input of a network-sided model) or the inference results (e.g., information based on output of a UE-sided model). Specifically, the information related to the predicted RS index may include i) at least one RS index and/or ii) at least one Reference Signal Received Power (RSRP) related to the at least one RS index.

As an example of the measurement results, the at least one RS index may refer to M RS index(es) with the highest RSRP among the one or more RS indices (e.g., the beams of the Set B). The at least one RSRP may refer to one or more RSRPs based on the one or more RS indices. Here, 'M' may be greater than or equal to 1.

As an example of the inference results, the at least one RS index may refer to K RS index(es) with the highest predicted RSRP among the plurality of RS indices (e.g., the beams of the Set A). The at least one RSRP may refer to predicted RSRP(s) of the K RS index(es). Here, 'K' may be greater than or equal to 1.

For example, the at least one RS index may be related to at least one future time instance. If the BM-case1 is assumed, the at least one RS index may be related to one future time instance. If the BM-case2 is assumed, the at least one RS index may be related to one or more future time instances (e.g., N (N≥1) future time instances).

According to an embodiment, the measurement may be related to at least one time instance. If the BM-case1 is assumed, the measurement may be based on one time instance. If the BM-case2 is assumed, the measurement may be based on one or more time instances (e.g., historic time instance(s)).

According to an embodiment, the measurement may be related to an input of a model. The predicted RS index may be related to an output of the model. The model may include i) a UE-sided model and/or ii) a network-sided model. That is, the operations according to the above-described embodiments may be performed when the model is implemented/included in i) the UE, ii) the base station (network), or iii) the UE and the base station (network).

The operations based on the steps S1210 and S1220 described above may be implemented by a device of FIGS. 14 to 16. For example, referring to FIG. 14, a UE 200 may control one or more transceivers 230 and/or one or more memories 240 so as to perform the operations based on the steps S1210 and S1220.

Below, the above-described embodiments are described in detail from a perspective of base station operation.

Steps S1310 and S1320 described below correspond to the steps S1210 and S1220 described with reference to FIG. 12. Considering the above correspondence, redundant description is omitted. That is, the detailed description of the base station operation described below can be replaced with the description/embodiment of FIG. 12 corresponding to the base station operation.

FIG. 13 is a flowchart illustrating a method according to another embodiment of the present disclosure.

Referring to FIG. 13, a method according to another embodiment of the present disclosure comprises a step S1310 of transmitting configuration information and a step S1320 of receiving a report based on the configuration information.

In the step S1310, a base station transmits configuration infiormatuon to a UE.

In the step S1320, the base station receives a report based on the configuration information from the UE.

The operations based on the steps S1310 and S1320 described above may be implemented by a device of FIGS. 14 to 16. For example, referring to FIG. 14, a base station 100 may control one or more transceivers 130 and/or one or more memories 140 so as to perform the operations based on the steps S1310 and S1320.

The operations/terms based on the above-described embodiments have been described assuming the 5G system. However, this is merely for convenience of explanation and is not intended to limit the scope of application of the technical problem and the problem solution to be solved by the present disclosure to a specific system. That is, the technical challenges/technical issues/problems mentioned in the present disclosure may equally exist in other systems (e.g., 6G system). It is obvious that embodiments of the present disclosure can be extended and applied to solve the same problems in the other systems. Therefore, for expanded application of embodiments of the present disclosure to other systems, terms defined/described based on the 5G system can be replaced/changed with terms defined in the other systems (or generalized terms not specific to one system). For example, PRACH, PUSCH, PUCCH, or SRS may be replaced/changed to an uplink signal (or uplink channel). For example, SSB, CSI-RS, PDSCH, or PDCCH may be replaced/changed to a downlink signal (or downlink channel).

A device to which an embodiment of the present disclosure is applicable (a device implementing the method/operation according to an embodiment of the present disclosure) is described below with reference to FIGS. 14 to 16.

FIG. 14 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

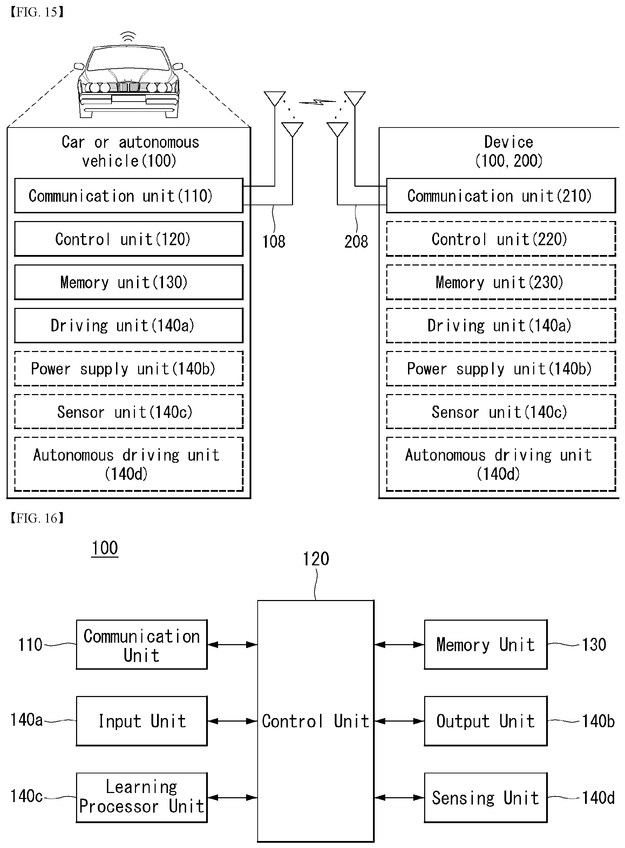

FIG. 15 illustrates a vehicle or an autonomous driving vehicle according to an embodiment of the present disclosure. The vehicle or autonomous driving vehicle may be implemented by a mobile robot, a car, a train, a manned/unmanned Aerial Vehicle (AV), a ship, etc.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The control unit 120 is electrically connected to the communication unit 110, the memory 130, and the additional components 140 and controls overall operation of the wireless devices. For example, the control unit 120 may control an electric/mechanical operation of the wireless device based on programs/codes/instructions/information stored in the memory unit 130. The control unit 120 may transmit the information stored in the memory unit 130 to the exterior (e.g., other communication devices) through the communication unit 110 via a wireless/wired interface or may store, in the memory unit 130, information received via the wireless/wired interface from the exterior (e.g., other communication devices) through the communication unit 110.

FIG. 16 illustrates an AI device according to the embodiment of the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 16, an AI device 100 may include a communication unit 110, a control unit 120, a memory unit 130, an I/O unit 140a/140b, a learning processor unit 140c, and a sensor unit 140d. The blocks 110 to 130/140a to 140d correspond to blocks 110 to 130/140 of FIG. 15, respectively.

The communication unit 110 may transmit and receive wired/radio signals (e.g., sensor information, user input, learning models, or control signals) to and from external devices such as other AI devices or an AI server using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server. The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server. The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

The wireless communication technology implemented in the device according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the device according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the device according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method comprising:

   receiving configuration information; and
   transmitting a report based on the configuration information,
   wherein the report includes information related to a predicted Reference Signal (RS) index among a plurality of RS indexes,
   wherein a measurement related to the report is based on information representing one or more RS indexes, and
   wherein the information representing the one or more RS indexes is configured based on a bitmap.

2. The method of claim 1, wherein information indicating the bitmap among a plurality of bitmaps is configured based on higher layer signaling.

3. The method of claim 1, wherein the bitmap is determined based on an order related to a time instance among a plurality of bitmaps.

4. The method of claim 3, wherein the bitmap is changed based on the time instance.

5. The method of claim 3, wherein the time instance includes i) a time instance for the measurement, ii) a time instance for a prediction, or iii) a time instance for the report.

6.  The method of claim 1, wherein the bitmap includes a first bitmap and a second bitmap, and wherein one or more subsets among subsets related to the plurality of RS indexes are configured based on the first bitmap.

7.  The method of claim 6, wherein an RS index belonging to each of the one or more subsets is configured based on the second bitmap.

8.  The method of claim 1, wherein an RS index belonging to each of subsets related to the plurality of RS indexes is configured based on the bitmap.

9.  The method of claim 1, wherein the information representing the one or more RS indexes is configured based on i) the bitmap or ii) mapping information.

10. The method of claim 9, wherein the number of RS indexes mapped to each of the one or more RS indexes of the plurality of RS indexes is indicated based on the mapping information.

11. The method of claim 1, wherein the information related to the predicted RS index includes i) at least one RS index and/or ii) at least one Reference Signal Received Power (RSRP) related to the at least one RS index.

12. The method of claim 11, wherein the at least one RS index is related to at least one future time instance.

13. The method of claim 1, wherein the measurement is related to at least one time instance.

14. The method of claim 1, wherein the measurement is related to an input of a model, and wherein the predicted RS index is related to an output of the model.

15. The method of claim 14, wherein the model includes i) a UE-sided model and/or ii) a network-sided model.

16. A user equipment comprising:

    one or more transceivers;
    one or more processors; and
    one or more memories connected to the one or more processors and storing instructions,
    wherein the instructions, based on being executed by the one or more processors, allow the user equipment to perform all steps of a method according to any one of claims 1 to 15.

17. A device comprising:

    one or more memories; and
    one or more processors connected to the one or more memories,
    wherein the one or more memories store instructions that, based on being executed by the one or more processors, allow the device to perform all steps of a method according to any one of claims 1 to 15.

18. A non-transitory computer readable medium storing instructions,
    wherein the instructions executable by one or more processors allow a user equipment to perform all steps of a method according to any one of claims 1 to 15.

19. A method comprising:

    transmitting configuration information; and
    receiving a report based on the configuration information,
    wherein the report includes information related to a predicted Reference Signal (RS) index among a plurality of RS indexes,
    wherein a measurement related to the report is based on information representing one or more RS indexes, and
    wherein the information representing the one or more RS indexes is configured based on a bitmap.

20. A base station comprising:

one or more transceivers;
one or more processors; and
one or more memories connected to the one or more processors and storing instructions,
wherein the instructions, based on being executed by the one or more processors, allow the base station to perform all steps of a method according to claim 19.

【FIG. 1】

【FIG. 2】

【FIG. 3】

15

Feedback

11    20

Training Data → Model Training

Data Collection

Model
13—Deployment /Update

Model
Performance—14
Feedback

Inference Data → Model Inference → Output → Actor

12    30    16    40

10

【FIG. 4】

4A    4B    4C

⇒   AI/ML   ⇒

【FIG. 5】

5A    5B    5C

$t_{-x}$  $t_{-x+1}$  ...  $t_0$   ⇒   AI/ML   ⇒   $t_N$  $t_{N+1}$  ...  $t_{N+K}$

【FIG. 6】

【FIG. 7】

(a)

(b)

【FIG. 8】

【FIG. 9】

【FIG. 10】

(a)

(b)

【FIG. 11】

(a)

(b)

【FIG. 12】

【FIG. 13】

```
                    ┌──────────┐
                    │  Start   │
                    └────┬─────┘
                         │
                         ▼
┌────────────────────────────────────────────────┐
│  Transmit configuration information             │──S1310
└────────────────────┬───────────────────────────┘
                     │
                     ▼
┌────────────────────────────────────────────────┐
│  Receive report based on configuration information │──S1320
└────────────────────┬───────────────────────────┘
                     │
                     ▼
              ┌──────────┐
              │   End    │
              └──────────┘
```

【FIG. 14】

【FIG. 15】

| Car or autonomous vehicle(100) | | Device (100, 200) |
|---|---|---|
| Communication unit(110) | | Communication unit(210) |
| Control unit(120) | 108    208 | Control unit(220) |
| Memory unit(130) | | Memory unit(230) |
| Driving unit(140a) | | Driving unit(140a) |
| Power supply unit(140b) | | Power supply unit(140b) |
| Sensor unit(140c) | | Sensor unit(140c) |
| Autonomous driving unit (140d) | | Autonomous driving unit (140d) |

【FIG. 16】

<u>100</u>

120

## INTERNATIONAL SEARCH REPORT

| International application No. |
|---|
| **PCT/KR2024/013983** |

**A.   CLASSIFICATION OF SUBJECT MATTER**

**H04B 7/06**(2006.01)i; **H04B 7/0456**(2017.01)i; **H04W 24/08**(2009.01)i; **H04B 17/318**(2015.01)i; **G06N 20/00**(2019.01)i

According to International Patent Classification (IPC) or to both national classification and IPC

**B.   FIELDS SEARCHED**

Minimum documentation searched (classification system followed by classification symbols)

H04B 7/06(2006.01); G06N 5/04(2006.01); H04B 7/04(2006.01); H04B 7/26(2006.01); H04J 11/00(2006.01);
H04L 1/06(2006.01); H04W 24/02(2009.01); H04W 48/14(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: AI(artificial intelligence)/ML(machine learning) 모델(model), 보고 (report), 참조 신호(Reference Signal, RS), 인덱스(index), 예측(predict), 빔(beam), 비트맵(bitmap)

**C.   DOCUMENTS CONSIDERED TO BE RELEVANT**

| Category* | Citation of document, with indication, where appropriate, of the relevant passages | Relevant to claim No. |
|---|---|---|
| Y | WO 2022-184010 A1 (VIVO MOBILE COMMUNICATION CO., LTD.) 09 September 2022 (2022-09-09)<br>See pages 9, 11, 13, 15 and 17; claims 1-7; and figure 4. | 1-20 |
| Y | KR 10-2014-0080320 A (PANTECH INC.) 30 June 2014 (2014-06-30)<br>See paragraphs [0132], [0154]-[0155], [0160] and [0222]-[0223]. | 1-20 |
| A | US 2023-0164817 A1 (LENOVO (SINGAPORE) PTE. LTD.) 25 May 2023 (2023-05-25)<br>See paragraphs [0062]-[0080]; and figure 14. | 1-20 |
| A | WO 2023-101304 A1 (LG ELECTRONICS INC.) 08 June 2023 (2023-06-08)<br>See claims 1-14. | 1-20 |
| A | KR 10-2014-0057299 A (LG ELECTRONICS INC.) 12 May 2014 (2014-05-12)<br>See paragraphs [0052]-[0081]. | 1-20 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 December 2024** | **30 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/013983**

| Patent document cited in search report | | | Publication date (day/month/year) | Patent family member(s) | | | Publication date (day/month/year) |
|---|---|---|---|---|---|---|---|
| WO | 2022-184010 | A1 | 09 September 2022 | CN | 115022896 | A | 06 September 2022 |
| | | | | EP | 4304237 | A1 | 10 January 2024 |
| | | | | JP | 2024-512358 | A | 19 March 2024 |
| | | | | KR | 10-2023-0138538 | A | 05 October 2023 |
| | | | | US | 2023-0412430 | A1 | 21 December 2023 |
| KR | 10-2014-0080320 | A | 30 June 2014 | KR | 10-2014-0058976 | A | 15 May 2014 |
| | | | | WO | 2014-073846 | A1 | 15 May 2014 |
| US | 2023-0164817 | A1 | 25 May 2023 | CN | 118303050 | A | 05 July 2024 |
| | | | | EP | 4437745 | A1 | 02 October 2024 |
| | | | | GB | 2628271 | A | 18 September 2024 |
| | | | | WO | 2023-096959 | A1 | 01 June 2023 |
| WO | 2023-101304 | A1 | 08 June 2023 | KR | 10-2024-0116893 | A | 30 July 2024 |
| KR | 10-2014-0057299 | A | 12 May 2014 | CN | 103891183 | A | 25 June 2014 |
| | | | | EP | 2755338 | A1 | 16 July 2014 |
| | | | | JP | 2014-527779 | A | 16 October 2014 |
| | | | | US | 2014-0254418 | A1 | 11 September 2014 |
| | | | | US | 2015-0237523 | A1 | 20 August 2015 |
| | | | | US | 9055476 | B2 | 09 June 2015 |
| | | | | US | 9554298 | B2 | 24 January 2017 |
| | | | | WO | 2013-035992 | A1 | 14 March 2013 |

Form PCT/ISA/210 (patent family annex) (July 2022)